# EUROPÄISCHE PATENTSCHRIFT

(11) **EP 3 497 041 B1**
(45) Veröffentlichungstag und Bekanntmachung des Hinweises auf die Patenterteilung: **14.09.2022**
(21) Anmeldenummer: 17749727.8
(22) Anmeldetag: 09.08.2017
(51) Int. Cl.: B65G 1/137

(54) **VERFAHREN ZUM KOMMISSIONIEREN VON GEMISCHTEN PRODUKTEN AUF EINER ZIELPALETTE**
METHOD FOR PICKING MIXED PRODUCTS ON A TARGET PALLET
PROCÉDÉ DE PRÉPARATION DES COMMANDES DE PRODUITS MIXTES SUR UNE PALETTE CIBLE

(30) Priorität: 09.08.2016 DE 102016114730; 23.08.2016 DE 102016115656
(43) Veröffentlichungstag der Anmeldung: 19.06.2019
(73) Patentinhaber: Fellner, Herbert, 83059 Kolbermoor (DE); Brandmüller, Ludwig, 83026 Rosenheim (DE)
(72) Erfinder: Fellner, Herbert, 83059 Kolbermoor (DE); Brandmüller, Ludwig, 83026 Rosenheim (DE)
(74) Vertreter: Winter, Brandl - Partnerschaft mbB
(86) Internationale Anmeldenummer: PCT/EP2017/070236
(87) Internationale Veröffentlichungsnummer: WO 2018/029271

(56) Entgegenhaltungen:
- EP-A1- 2 330 060
- EP-A2- 2 226 273
- EP-A2- 2 769 341
- WO-A1-2011/054053
- DE-A1- 3 814 101
- US-A- 6 055 462

## Beschreibung

Die Erfindung betrifft ein Verfahren zum Steuern einer Kommissionierung von gemischten Produkten auf einer Zielpalette.

Ein derartiges Kommissionierverfahren steuert in Abhängigkeit von einem mittels eines Warenmanagementsystem (WMS) vorgegebenen Parametern nach einem vorbestimmten Planungsalgorithmus einen Packroboter oder ein Beladesystem, um eine Kommissionierpalette (mit gemischten Produkten beladene Zielpalette) aufzubauen.

In den Verteillagern von Handelsketten werden diverse Sortimentsartikel zur Auslieferung an die Filialen auf Kommissionierpaletten zusammengestellt. Das wird häufig durch menschliche Packarbeit umgesetzt. Bedingt durch Änderung diverser Rahmenbedingungen (arbeitsrechtliche Vorschriften, demographischer Wandel, Anforderung an die Packqualität, Kostendruck, etc.) soll der Kommissioniervorgang automatisiert werden.

Bei dieser manuellen Kommissionierung spielt die Erfahrung der Kommissionierer eine erhebliche Rolle, da die einzelnen Produkte auf der Zielpalette derart zu positionieren sind, dass der Produktstapel zum einen relativ stabil ist und zum anderen die Produkte nicht beschädigt werden. Beispielsweise beim Kommissionieren von Obst, Gemüse oder dergleichen haben die dabei verwendeten Trays Stapelnasen, die in entsprechende Stapelausnehmungen des im Produktstapel darüber oder darunter liegenden Trays eingreifen, um diese relativ zu einander zu positionieren. Das Stapeln derartiger Trays erfolgt derzeit ausschließlich von Hand.

Ein weiteres Problem bei der Kommissionierung besteht darin, dass die Produkte auf der Zielpalette in einer bestimmten Reihenfolge lagepositioniert werden müssen, so dass dann beispielsweise im Ladengeschäft die Produkte ohne Hin- und Herfahren in die Regale eingeräumt werden können. Aus diesem Grund werden bei Discountern üblicherweise die Produkte innerhalb der Verkaufsräume nach einer bestimmten Reihenfolge aufgestellt, die auch dem Kunden geläufig ist, so dass er das jeweilige Produkt schnell auffinden kann. Dementsprechend müssen die Collis/Produkte in Abhängigkeit von dieser Anordnung im Verkaufsraum auf der Zielpalette positioniert werden.

Diese komplexe Aufgabenstellung lässt sich bisher nur von einem erfahrenen Kommissionierer lösen. Maschinelle Lösungen, wie sie im Folgenden beschrieben werden, sind hierzu nicht geeignet.

So offenbart die DE 38 14 101 A1 ein Verfahren zum Steuern einer Kommissionierung von gemischten Produkten auf einer Zielpalette mit den Schritten:
a) Erzeugen eines Packmusters mittels eines Packmustergenerators in Abhängigkeit vom Kommissionierauftrag;
b) Bereitstellen der Produkte auf Zuführbahnen;
c) Entnahme der Produkte von den Zuführbahnen mittels zweier Stapler in einer vorbestimmten Sequenz nach dem Packmuster;
d) Abstellen der jeweiligen Produkte in zwei Produkt-Türmen mittels der Stapler, wobei die beiden Produkt-Türme etwa parallel aufgebaut werden und im Abstand zueinander stehen, und dann zusammengefügt werden;
e) Schieben der beiden Produkt-Türme mittels eines Schiebers auf eine Beladeplatte;
f) Wiederholung der Schritte b-e bis alle Produkt-Türme auf die Beladeplatte beladen sind;
g) Schieben der Produkt-Türme mittels des Schiebers gegen einen Gegenschieber;
h) Verfahren der Beladeplatte entlang einer Führung in Horizontalrichtung zum Übergeben der zusammengeschobenen Produkt-Türme an die Zielpalette;
i) Ausschleusen der so erstellten Kommissionierpalette über eine Ausschleusebahn.

Weiterhin zeigt die US 8,074,431 B1 ein Beladesystem, bei dem die Produkte über eine Zuführbahn zugeführt werden und dann mittels eines Greiferkopfes auf einem Gitterrost abgelegt werden. Dabei werden die Produkte schichtweise auf dem Gitterrost angeordnet und dann nach Aufbau der Schicht/Lage an eine Zielpalette übergeben. Prinzipiell ist es mit einer derartigen Lösung auch möglich, auf dem Gitterrost einen mehrlagigen Produktstapel auszubilden, der dann im Ganzen an die Zielpalette übergeben wird.

In dem Fall, in dem Produkte mit unterschiedlichen Abmessungen und somit auch mit unterschiedlichen Stapelnasenpositionen vorliegen, kann eine derartige automatisierte Lösung nicht verwendet werden, da der schichtweise Aufbau in der vorbeschriebenen Reihenfolge eine Relativpositionierung der Stapelnasen zu den Stapelausnehmungen bei unterschiedlichen Produkttypen ausschließt.

Die US 2010/0146907 A1 offenbart ein Beladesystem, bei dem anstelle eines Gitterrostes eine teilbare Beladeplatte verwendet wird, auf der die Produkte schicht- oder lagenweise abgelegt und dann an eine Zielpalette übergeben werden. Dieses Beladesystem zeigt die gleichen Nachteile wie die zuvor beschriebene Lösung.

In der JP 2011 251 837 A ist ein Beladesystem mit einem Gabelkopf gezeigt - ein derartiger Gabelkopf ist für Kommissionieraufgaben der vorbeschriebenen Art ungeeignet.

In der US 2008 267 759 ist ein Beladesystem gezeigt, bei dem die Produkte Schicht für Schicht direkt auf einer Zielpalette abgelegt werden.

Die DE 10 2013 003 768 E1 zeigt eine Beladesystem mit einem Gabelkopf, der mit einer Messerkante ausgeführt sein kann. Ein derartiger Gabelkopf ist - wie vorstehend zur JP 2011 251 837 A ausgeführt - nicht geeignet, um die eingangs erläuterten Kommissionieraufgaben zu erfüllen, sondern wird vorzugsweise bei Trockengut eingesetzt.

Die WO 2012/019 591 A2 zeigt ein Beladesystem, bei dem ein umfangsseitig an einem Gebinde/Produkt angreifender Greiferkopf mit einer Stapelablage zusammenwirkt, die eine geneigte Grundfläche und eine Zentrierstange zum Stapeln der Kommissionsware hat.

Auch mit einer derartigen Lösung lassen sich komplexere Kommissionieraufgaben nicht erfüllen.

Prinzipiell kann das Beladen der Palette lagenorientiert erfolgen, wobei dann der Produktstapel Lage für Lage aufgebaut wird. Alternativ kann auch ein höhenorientierter Aufbau erfolgen, bei dem über einen Packroboter auf einer Zielpalette parallel mehrere Produktstapel/Türme aufgebaut werden. Derartige Lösungen sind beispielsweise in den Druckschriften EP 2 769 341 A2, WO 2014/041 318 A1, US 2017/0 146 341 A1, US 6,120,241 B1, US 2010/0 324 729 A1 und US 2010/0 268 675 A1 offenbart. Bei all diesen Lösungen werden die Produktstapel jedoch vom Beladeroboter direkt auf der Zielpalette aufgebaut - eine derartige Vorgehensweise ist nur für Produkte mit einer vorbestimmten Geometrie und entsprechend angepassten Greiferköpfen des Beladeroboters geeignet. Bei komplexeren Kommissionieraufgaben muss zusätzlich manuell kommissioniert oder korrigiert werden.

Demgegenüber liegt der Erfindung die Aufgabe zugrunde, ein Verfahren zum Steuern einer Kommissionierung von gemischten Produkten auf einer Zielpalette zu schaffen, mit dem der Kommissioniervorgang vereinfacht ist.

Diese Aufgabe wird durch ein Verfahren mit den Merkmalen des Patentanspruchs 1 gelöst.

Vorteilhafte Weiterbildungen der Erfindung sind Gegenstand der Unteransprüche.

Das erfindungsgemäße Verfahren verwendet einen Planungsalgorithmus zum Aufbauen einer Kommissionier-Palette, wobei zunächst in Abhängigkeit vom Kommissionierauftrag ein Packmuster mittels eines Packmustergenerators erzeugt wird. Die zu kommissionierenden Produkte werden auf mehreren Zuführbahnen bereit gestellt und nach der vom Packmustergenerator vorbestimmten Sequenz über einen Greiferkopf oder ein sonstiges Handlingsgerät (Beladeroboter) von den Zuführbahnen entnommen.

Die jeweils entnommenen Produkte werden dann in mehreren Produktstapeln auf einer Beladeplatte abgestellt. Der Aufbau dieser Produkt-Türme erfolgt dabei parallel, so dass diese sozusagen parallel "wachsen". Die Produkt-Türme stehen dabei im Abstand zu einander, so dass der Greiferkopf in die Lücken zwischen den Produkt-Türmen eintauchen kann und somit das Stapeln und Zentrieren des Produktstapels mit Bezug zu einem darauf abzulegenden Produkt vereinfacht ist. Dementsprechend muss die Grundfläche der Beladeplatte größer als die Beladefläche der Zielpalette sein.

Nach dem Aufbau der Produkt-Türme werden diese auf das Maß der Zielpalette zusammengeschoben und in der Folge an die Zielpalette übergeben. Die so erstellte Kommissionier-Palette wird dann in geeigneter Weise ausgeschleust.

Bei der Erzeugung des Packmusters geht insbesondere die Art der Produkte, beispielsweise deren Boden- und Kantenstrukturen und die Art und die Eigenschaften der in den Trays oder dergleichen aufgenommenen Waren ein, so dass je nach Vorgabe über den Packmustergenerator die Position des jeweiligen Produktes in einem Produkt-Turm festgelegt wird.

Bei einem besonders bevorzugten Ausführungsbeispiel wird das vom Packmustergenerator erzeugte Packmuster der Kommissionierpalette auf einem Display visualisiert. Parallel oder zusätzlich kann der tatsächliche Aufbau der Kommissionier-palette am Display dargestellt werden. Diese Visualisierung ermöglicht es, dass ein Kommissionierer den Kommissioniervorgang überwacht und ggf. manuell eingreift.

Bei einem Ausführungsbeispiel ist es vorgesehen, dass der Kommissionierer den Aufbau der Kommissionierpalette manuell über das Display oder über eine sonstige Eingabevorrichtung ändern kann. Diese manuelle Eingabe wird dann mit der vorliegenden Kommissionieraufgabe gespeichert und geht bei ähnlichen Kommissionieraufträgen in die Berechnung des Packmusters ein. Auf diese Weise wird ein selbstlernendes System geschaffen, bei dem die Erfahrung des Kommissionierers bei der Generierung der Packmuster berücksichtigt ist.

Der Kommissioniervorgang ist weiter vereinfacht, wenn kleinere Collis auf einem Zwischenplatz/Pufferplatz abgestellt und auf ein Maß zusammengeschoben werden, das dem Maß der größeren Produkte entspricht, die beispielsweise bereits in einem Produkt-Stapel angeordnet sind. Die zusammengeschobenen Collis werden dann von dem Pufferplatz auf einen bereits teilweise aufgebauten Produkt-Turm oder die Beladeplatte aufgesetzt.

Dabei kann es vorteilhaft sein, wenn auf der Beladeplatte vier Produkt-Türme aufgebaut werden, und jedes der kleineren Collis etwa die Hälfte oder ein Viertel der Fläche der Produkte aufweist, so dass entsprechend auf dem Pufferplatz zwei oder vier Collis pro Lage abgesetzt werden.

Die Stabilität der Kommissionierpalette ist optimiert, wenn im Turmaufbau schwere Produkte unten liegend angeordnet sind.

Wie eingangs erläutert, geht in die Berechnung des Packmusters auch die Boden- und Kantenstruktur des jeweiligen Produktes, beispielsweise eines Trays, ein. So sind beispielsweise bei Trays für Obst und Gemüse Zentriernasen vorgesehen, die in entsprechende Zentrierausnehmungen des benachbarten Trays eintauchen, um die beiden Trays relativ zu einander zu positionieren. Diese Zentriermittel sind für unterschiedliche Produkte unterschiedlich - dies wird im Packmustergenerator berücksichtigt, so dass - sofern es die Produktsequenz erlaubt - gleichartige Produkte mit derartigen Zentriermitteln vorzugsweise in einem oder mehreren Produkt-Türmen angeordnet werden. Bisher mussten derartige Trays von Hand gestapelt werden.

Bei einem Ausführungsbeispiel ist es vorgesehen, dass die Kommissionierpalette nach dem Ausschleusen mit einer Transportsicherung versehen ist.

Der Kommissioniervorgang erfolgt sehr schnell, wenn zumindest zwei Greiferköpfe zum Aufbau der Produkt-Türme vorhanden sind.

Bei der Erzeugung des Packmusters werden vorzugsweise folgende Parameter berücksichtig: die Palettenhöhe sollte 2 m nicht überschreiten, das maximale Paletten-gewicht beträgt beispielsweise 1200 kg, das Packmuster wird im Hinblick auf die maximale Stabilität des Turmaufbaus optimiert (ebener oberer Abschluss der Kommissionierpalette, keine Hohlräume, Rastfähigkeit der Trays/Collis, symmetrische Gewichtsverteilung, etc.

Des Weiteren wird es bevorzugt, gleiche Artikel nicht auf mehrere Kommissionier-paletten zu verteilen und Artikelgruppen zusammenzufassen. Ganz besonders ist es bevorzugt, wenn gleiche Artikel in einem oder mehreren Türmen zusammengefasst sind.

Die Kommissioniersicherheit ist weiter verbessert, wenn der Packmustergenerator zumindest eine alternative Aufbauvariante generiert, so dass bei Bedarf, beispielsweise bei einem Störfall, automatisch oder manuell eine alternative Aufbauvariante ausgewählt werden kann.

Bei der Generierung mehrerer Aufbauvarianten kann vom Kommissionierer oder aber auch automatisch eine Priorisierung durchgeführt werden.

Beim Kommissionieren wird - wie vorstehend ausgeführt - besonderes Augenmerk darauf gerichtet, dass der bereits aufgebaute Produkt-Turm mit Bezug zu dem abzusetzenden Produkt zentriert ist, so dass eine exakte Ablage gewährleistet ist.

Bevorzugte Ausführungsbeispiele der Erfindung werden im Folgenden anhand schematischer Zeichnungen näher erläutert. Es zeigen:
Figur 1 eine dreidimensionale Darstellung eines Ausführungsbeispiels eines Beladesystems, das mittels des erfindungsgemäßen Verfahrens betrieben wird;
Figur 2 ein Ablaufschema zur Verdeutlichung, wie ein Packmuster von einem Packmustergenerator erzeugt wird und
Figur 3 eine Detaildarstellung eines Schrittes gemäß dem Ablaufschema in Figur 2, mit dem eine stabile Aufbauvariante bestimmt wird.

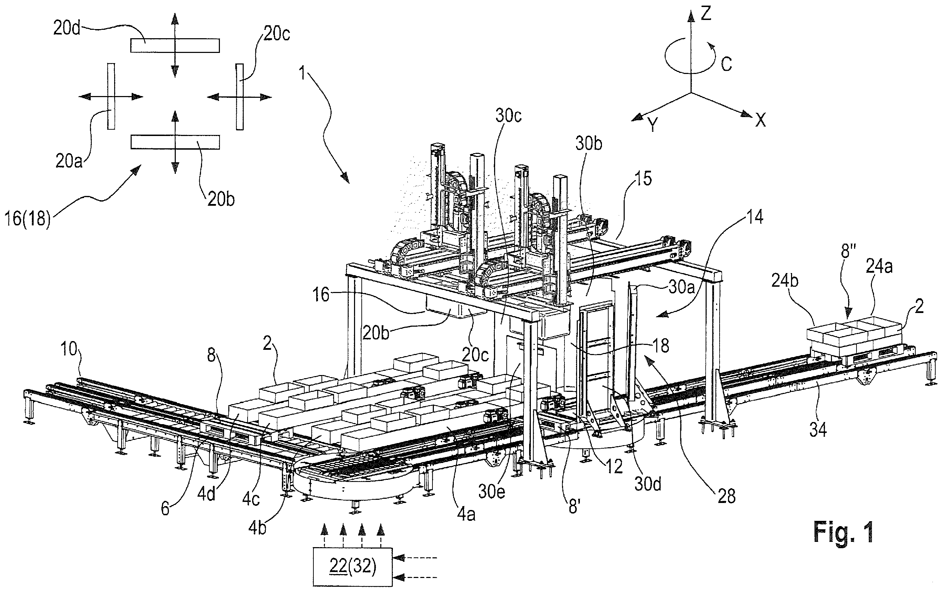

Gemäß der Figur 1 werden die mittels eines Beladesystems 1 zu kommissionierenden Produkte 2 (Collis), beispielsweise Obst- und Gemüsesteigen aus dem eingangs beschriebenen Zwischenlager auf vier Zuführbahnen oder -bändern 4a, 4b, 4c und 4d bereitgestellt. In einer Ebene unterhalb der Zuführbahnen 4 ist ein Palettentransportband 6 vorgesehen, über das eine Zielpalette 8, die von einem Palettenmagazin 10 vereinzelt wird, über eine 90°-Umlenkung in eine Beladeposition gebracht wird, die in der Darstellung gemäß Figur 1 mit dem Bezugszeichen 8' gekennzeichnet ist. Anstelle mit einem Palettentransportband kann die Zuführung auch durch eine verfahrbare Teleskopgabel erfolgen.

In der Beladeposition befindet sich die Zielpalette 8' unterhalb einer teilbaren Beladeplatte 12. Die Grundfläche, d.h. die zu beladende Fläche der Beladeplatte 12, ist deutlich größer als die Grundfläche der Palette 8' ausgeführt. Diese Beladeplatte 12 ist - wie im Folgenden noch näher erläutert wird - in Horizontalrichtung verfahrbar oder teilbar innerhalb einer Kommissioniereinheit 14 geführt. Diese hat ein Portal 15, an dem über eine X-, Y- und/oder Z-Führung zwei über Linearantriebe verstellbare Greiferköpfe 16, 18 angeordnet sind. Die Greiferköpfe 16, 18 lassen sich des Weiteren noch über eine Rotationsachse C (siehe Figur 1) verschwenken, um diese zum Produkt 2 ausrichten zu können.

Dadurch, dass zwei Greiferköpfe 16, 18 parallel eingesetzt werden, können diese den kompletten Palettenbauraum sowie alle Aufnahmepositionen der Zuführbahnen 4 unabhängig voneinander erreichen. Bei Bauraumüberschneidung wird ein Greiferkopf 16, 18 in die jeweilige Warteposition gefahren, so dass der andere Greiferkopf 16, 18 die Zielposition auf der Beladeplatte 12 erreichen kann. Im Fehlerfall kann mindestens ein Greiferkopf 16, 18 mit dem zugeordneten Greiferkopfportal die Palettierung bei halbierter Leistung fortsetzen.

Aufgrund der insgesamt acht Colli-Aufnahmepositionen verteilt über vier parallele Zuführbahnen 4 sowie den optional neben dem Portal 15 mit den beiden Greiferportalen vorsehbaren, nicht dargestellten Pufferpositionen und einer Auftragspalettenhöhe von beispielsweise 2000 mm kann das Beladesystem bei einer hohen Kommissionierleistung sehr kompakt ausgeführt werden. Die Pufferpositionen können ebenerdig und ohne zusätzliche Zentrierhilfen anfahrbar sein. Diese Pufferpositionen werden zur Unterstützung der sequenzgerechten Bereitstellung von Collis für den Bau der Auftragspalette genutzt. Wie eingangs erläutert, werden kleinere Collis, die beispielsweise die halbe oder ein Viertel der Grundfläche der vorbeschriebenen Produkte/Collis aufweisen, zunächst im Abstand zu einander positioniert und dann mittels des Greiferkopfes zusammengeschoben, so dass sie in dieser zusammengeschobenen Anordnung die Fläche eines größeren Produktes aufweisen. Diese zusammengeschobene Lage der kleineren Collis wird dann mittels des Greiferkopfes 16, 18 auf den bereits aufgebauten Produktstapel aufgelegt, so dass entsprechend zwei oder vier kleinere Collis auf einem größeren Produkt/Tray zu liegen kommen.

Insbesondere bei Obst- oder Gemüse-Trays ist es vorteilhaft, wenn der Greifer 16, 18 noch eine Rückhalteplatte hat, die das Gemüse/das Obst während des Stapelvorgangs niederhalten.

Die vorbeschriebenen Greiferportale sind mit riemengetriebenen Linearachsen versehen, so dass eine sehr gute Wiederholgenauigkeit im Bereich von +/- 2 mm gewährleistet ist.

Wie in Figur 1 oben links angedeutet, hat bei dem dargestellten Ausführungsbeispiel jeder Greiferkopf 16, 18 jeweils vier Greiferplatten 20a, 20b, 20c, 20d, die rechtwinklig zu einander angestellt sind und somit in der Draufsicht in etwa ein Rechteck (zumindest abschnittsweise) ausbilden. Die Greiferplatten 20 sind in Abhängigkeit von der Geometrie der Produkte 2 in Pfeilrichtung (siehe Figur 1 oben links) auseinander oder aufeinander zu verfahrbar, um in seitliche Anlage an die Außenwandung des Produktes 2, beispielsweise einer Obst-/Gemüsesteige gebracht zu werden. Diese Verschiebebewegung erfolgt so, dass durch Kraft- oder Reibschluss eine hinreichende Haltekraft aufgebracht werden kann, um das Produkt 2 jeweils zu halten.

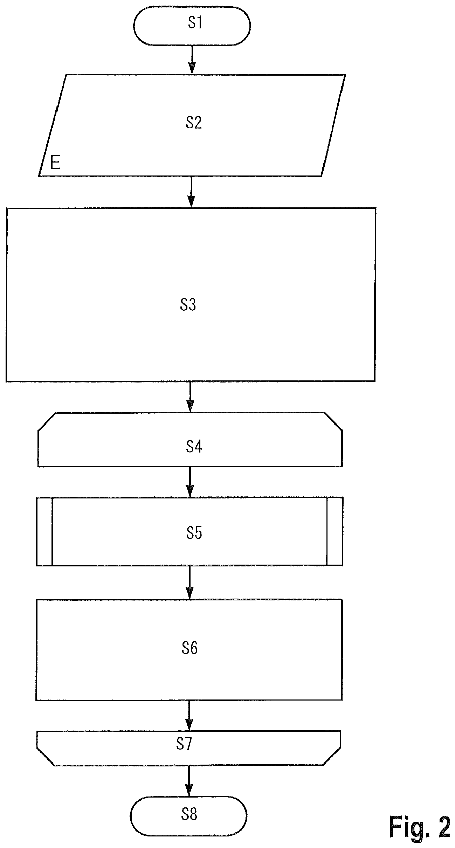

In den dreidimensionalen Darstellungen gemäß den Figuren 1 und 2 sind jeweils nur zwei der Greiferplatten, beispielsweise die Greiferplatten 20b, 20c des Greiferkopfes 16 sichtbar. Auch die Antriebe zur Verstellung der Greiferplatten 20 sind nicht dargestellt.

Zur Ansteuerung des Beladesystems 1 ist eine Steuereinheit 22 (mit integriertem Packmustergenerator 32) vorgesehen, in der nach einem Planungsalgorithmus zur Erzeugung der Kommissionieraufträge ein vorbestimmtes Packmuster berechnet wird, nach dem die Produkte 2 auf der Beladeplatte 12 / Zielpalette 8 abgelegt werden sollen. In Abhängigkeit von diesem Packmuster werden dann die Greiferköpfe 16, 18 angesteuert, um die Produkte 2 in der vorbestimmten Sequenz von den Zuführbahnen 4a, 4b, 4c und 4d abzunehmen und auf der Beladeplatte 12 abzulegen. Dabei werden die Produkte 2, beispielsweise die Obst- und Gemüsesteigen zu Türmen 24 gestapelt (Produktstapel). Dieses Stapeln erfolgt schichtweise derart, dass die Produkt-Türme 24 sozusagen parallel "wachsen". Dabei kann es jedoch durchaus sein, dass bei einem Produkt-Turm 24 ein höheres Produkt oder mehrere Produkte gleichzeitig abgelegt werden, so dass die Produktstapelhöhe der Vielzahl von Produktstapeln in gewissem Maße variieren kann.

Die einzelnen Produktstapel/-türme auf der Beladeplatte 12 sind zunächst zu einander beabstandet, um den Greiferplatten 20 der Greiferköpfe 16, 18 Raum zum Einfahren in die Zwischenräume zwischen den Produktstapeln zu schaffen. Auf diese Weise können beispielsweise ein bis acht, vorzugsweise vier Produktstapel/Türme 24 auf der Beladeplatte 12 abgesetzt werden. Wie erwähnt, sind diese Türme 24 mit einem Abstand zu einander beabstandet, um Raum zum Einfahren des Greiferkopfes 16, 18 zu geben.

Wie erläutert, können durch einen Hub des Greiferkopfes 16, 18 auch mehrere Produkte als Zwischenstapel von den Zuführbahnen 4 abgenommen und auf der Beladeplatte 12 abgelegt werden.

Wie bereits erläutert, kann bei kleineren Produkten/Collis vorgesehen werden, diese in einer Pufferstation zwischenzulagern, dort zusammenzuschieben und dann mittels des Greiferkopfes auf dem jeweiligen Turm 24 abzulegen.

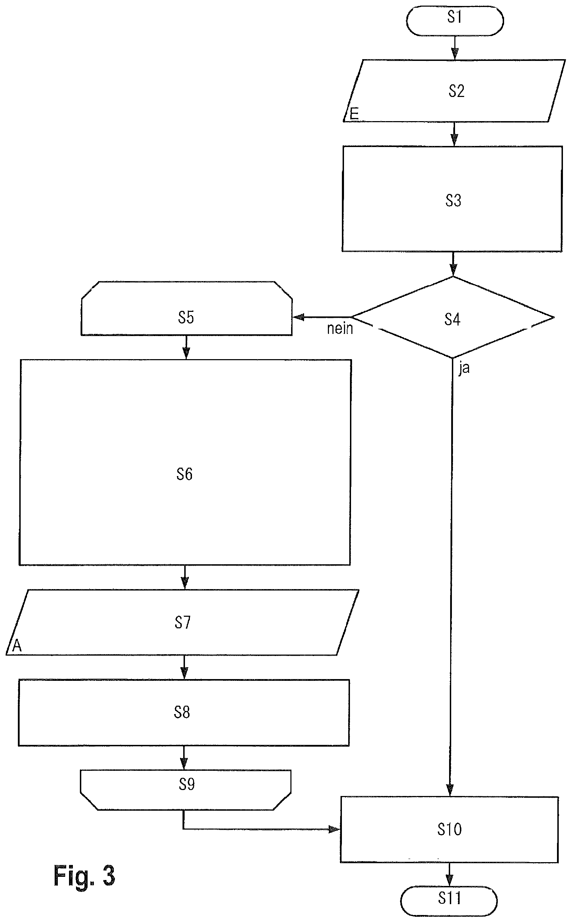

Das Beladesystem ist des Weiteren mit einer Zentriereinrichtung 28 ausgeführt. Diese Zentriereinrichtung 28 hat fünf Schiebewände 30a, 30b, 30c, 30d und 30e, die gemäß Figur 1 entlang des Außenumfangs der Beladeplatte 12 angeordnet sind und - ähnlich wie die Greiferplatten 20 - auf einander zu verfahrbar sind, um die Produkt-stapel/Türme 24 auf der Beladeplatte 12 derart zu verschieben, dass sich die Abstände schließen und die Türme 24 an einander anliegen. D.h. über die Schiebewände 30 erfolgt eine Kompaktierung und Zentrierung der Türme 24 in einer Weise, dass die von den Türmen 24 beanspruchte Grundfläche gleich oder kleiner ist als die Grundfläche der Zielpalette 8'. Nach diesem Zentriervorgang bleiben die Schiebewände 30 in Anlage an den Türmen 24, so dass diese relativ zu einander lagefixiert sind. Die Beladeplatte 12 wird dann entlang einer Führung in Horizontalrichtung (in der Zeichenebene gemäß Figur 3) verfahren oder auseinander gefahren, wobei die Türme 24 stehen bleiben und dann durch Auseinanderfahren der Schiebewände 30 und ggf. einem kleinen Vertikalhub (Z-Richtung) auf der Zielpalette 8' abgelegt werden können.

Die Schiebewände 30a, 30b, 30c, 30d und 30e sind unabhängig von einander verstellbar, so dass die auf der Beladeplatte 12 abgelegten Türme 24 auf das Paletten-Nennmaß inklusive einem Überhang von beispielsweise 25 mm zusammengeschoben werden, bevor diese an die Zielpalette 8 oder ein sonstiges Ladehilfsmittel übergeben werden. Die Schiebewände 30 werden beispielsweise mittels Asynchronantrieben und einer Zahnstangenmechanik verfahren. Dabei sind die Schiebewände 30c, 30d, 30e als Einheit konstruiert, die mittels eines gemeinsamen Antriebs verfahrbar sind. Die beiden in Figur 1 hinten liegenden Schiebewände 30a, 30b sind schwenkbar gelagert und angetrieben, so dass sie in der dargestellten Position zur Ausschleusung der fertiggestellten Auftragspalette den Transportweg freigeben. D.h. die ausschleusungsseitig ausgebildete Schiebewand ist zweiteilig ausgeführt und lässt sich zum Herausfahren der beladenen Zielpalette 8" öffnen. Diese Verschwenkung erfolgt beispielsweise über eine Gelenkanordnung und ein Zahnstangenantriebe. Dementsprechend hat die dargestellte Zentriereinrichtung 28 sieben Antriebseinheiten (zwei Schwenkantriebe, fünf Linearantriebe), so dass das Zusammenschieben der Türme 24 sehr schnell und mit hoher Präzision erfolgen kann.

Die kommissionierte Palette 8" wird dann über eine Ausschleusebahn 34 ausgeschleust. Dabei kann die kommissionierte Palette 8" mit einer geeigneten Transportsicherung, beispielsweise einem Band oder einer Folie versehen werden. Diese Transportsicherung kann innerhalb der Kommissioniereinheit 14 oder aber auch in einer nachfolgenden Station angebracht werden. In der Darstellung gemäß den Figuren 1 und 2 ist die beladene Zielpalette (kommissionierte Palette 8") lediglich in einem teilweise beladenen Zustand dargestellt. Wie vorstehend erläutert, kann die Gesamthöhe der ausgeschleusten Palette 8" etwa 2 m betragen.

Der Planungsalgorithmus gibt vor, wie die zu kommissionierenden Artikel (Collis) aus gegebenen Lieferungen geometrisch auf Paletten positioniert werden müssen, um eine optimale Anzahl Palettenstellplätze zu erhalten, die diverse Kriterien hinsichtlich Volumenausnutzung, Stabilität, Reihenfolge etc. erfüllen.

Außerdem müssen die Kommissionieraufträge für die Paletten die Möglichkeiten des eingesetzten Stapel-Roboters berücksichtigen. Dieser baut im Wesentlichen Türme im Format ¼ Euro-Palette auf, schiebt anschießend die Ware auf Euro-Format zusammen und setzt sie auf eine Euro-Palette ab.

Für den Planungsalgorithmus sind nur Lieferungen mit Artikeln und Anzahl an Collis bekannt (einzige Einheit zu jedem Artikel). Chargen/MHDs oder vorausschauende Zeitplanung spielen vorzugsweise keine Rolle.

Die Schnittstellen des Planungsalgorithmus bestehen einerseits zu einem WMS (Warenmanagementsystem), andererseits zu der Steuerung des Packroboters. Außerdem stellt eine graphische Oberfläche die Bedienerschnittstelle dar.

Das WMS verwaltet außerdem die Entstapelung von Vollpaletten der Sortimentsartikel und verteilt diese Mengen als greifbare Colli-Türme in einer Flächenlagerung, wo sie mittels Portalgreifer abgestellt und geholt werden können.

Die folgenden Daten bilden die Grundlage für jegliche Planungsvorgänge:
Artikelstamm:
Ein Artikelstamm kann manuell im Kommissionier-System, im Folgenden "Komm-System" abgekürzt, gepflegt oder über eine Schnittstelle seitens WMS aktuell gehalten werden.

Wesentliche Grunddaten sind:
- Artikel-Nr.
- Artikel-Bezeichnung
- Artikel-Gruppe

Messbare Angaben (immer auf 1 Colli bezogen):
- Länge, Breite, Höhe [mm]
- Gewicht [kg]
- Einteilung der Grundfläche zur Bewertung der Auflagepunkte (4,9,16)

Kriterien für Stapelung:
- Colli-Art (1, 2, 3) (offen mit, offen ohne Steg, geschlossen)
- Colli-Material (1,2, 3) (Pappe, Holz, Kunststoff)
- Aufstapel-Fähigkeit (welche Colli-Arten können hier aufgesetzt werden)
- Rastfähigkeit (aufeinandergesetzte Collis greifen ineinander oder nicht)

### Artikelklassen

Diese werden als Kombinationen aus den Stapel-Kriterien gebildet. Dabei werden zur Bestimmung der Fläche, Höhe, Gewicht beispielsweise folgende Bereiche verwendet:
Fläche [m²]: 0 - 0,12; 0,13 - 0,24
Höhe [m]: 0 - 0,16; 0,17 - 0,34
Gewicht [kg]: 0 - 8; 9 - 16; 17 - 25

Daraus entstehen 18 - 19 Haupt-Klassen. Die Zuordnung der Artikel zu den Klassen ermöglicht die Beurteilung bzgl. Qualität und Leistung.

### Packanforderungen

Hier werden die unterschiedlichen Anforderungen verwaltet, die der Planungsalgorithmus erfüllen soll:
- Anforderungs-Nr.
- Beschreibung
- aktuelle Priorisierung
- Einzel-Bewertung für Gesamt-Bewertung einer Palette

Neue Anforderungen sollen nicht frei eingerichtet werden. Sie sollen immer in den Algorithmus eingearbeitet werden (dies erfolgt durch eine Programm-Änderung).

### Lieferungen

Die Lieferungen werden in beliebigem Abstand in beliebigem Umfang übermittelt. Die eigentliche Bearbeitung ist durch die Bereitstellung der folgenden Informationen über die Packpositionen seitens des WMS zeitlich eingeordnet.

Kopf-Informationen:
- Lieferungs-Nr.
- Kunden-Daten (optional, lediglich zur Anzeige)
- Bearbeitungs-Status

Positionen:
- Pos-Nr.
- Art-Nr.
- Menge Collis
- Bearbeitungs-Status

Durch den Planungs-Algorithmus werden dann Kommissionieraufträge gebildet, die über die Schnittstelle an die Anlage zur Abarbeitung gegeben werden. Ein Kommissionierauftrag entspricht dabei einem Palettenstellplatz, der mit folgenden Informationen verbunden ist.

Kopf-Informationen
- Komm-Auftr.-Nr.
- Lieferungs-Nr.
- Bearbeitungs-Status

Positionen:
- Komm.-Pos.-Nr.
- Pos-Nr.
- Art-Nr.
- Menge
- Geometrische Position auf der fertigen Palette
- Geometrische Position beim Pack-Ablauf (ggf. Zwischen-Schritt bzgl. Packen)
- Bearbeitungs-Status

Die Lieferungen und die geplanten Kommissionieraufträge durchlaufen verschiedene Status (Bearbeitungsstatus) anhand derer beispielsweise folgende Entscheidungen im Ablauf getroffen werden:
Lieferungen:
   1. Lieferung im Komm-System angelegt
   2. Kommissionierung geplant
   3. Komm.-Planung an WMS übermittelt
   4. Pack-Vorgang gestartet (Beginn erster Stellplatz)
   5. Bearbeitung abgeschlossen
Lieferungs-Positionen:
   1. angelegt
   2. geplant
   3. gepackt
Kommissionieraufträge:
   1. erzeugt, angelegt
   2. Packen begonnen
   3. Packen abgebrochen (Fehler)
   4. Packen manuell fortgesetzt (nach Fehler)
   5. Packen abgeschlossen
Komm.-Positionen:
   1. angelegt
   2. Menge durch WMS bereitgestellt (Bahn bekannt)
   3. Menge an Vor-Position durch Roboter abgestellt (ggf.)
   4. Menge an Pack-Position abgestellt

Das Komm-System kommuniziert mit einem WMS (Warehouse Management System) bzw. einem MFC (Material Flow Controller). Diese übernehmen die Lagerhaltung und die Verwaltung von Anlieferungen, Auslieferungen, Touren.

Das WMS verwaltet die Entstapelung von Vollpaletten der Sortimentsartikel und verwaltet diese Mengen als greifbare Colli-Türme. Der MFC koordiniert den Transport der Colli zum Komm-System.

Es werden 5 Arten von Daten ausgetauscht, wodurch auch schon der grobe Ablauf des Kommisioniervorgangs bestimmt ist:
1. Daten zu Lieferungen (Positionen), die in Komm.-Stellplätze umgesetzt werden sollen
2. geplante Stell-Plätze mit ihren Bestandteilen in der Reihenfolge der benötigten Bereitstellung
3. Meldung über die Bereitstellung der Komm.-Anteile Direkt anschließend: Quittierung bei Übernahme der Mengen durch den Roboter
4. Abschluss der Komm.-Palette
5. Meldungen über Fehler-Situation, z.B. bereitgestellter Colli entspricht nicht der Erwartung

Die zum Einsatz kommenden Greiferköpfe 16, 18 können Colli von 1/4 - 1/16 Fläche einer Euro-Palette (1200mm × 800mm) greifen (Höhe quasi beliebig von einem Colli bis beispielsweise 70 cm). Grundflächenmaße der Colli sind also: 600×400, 300×400, 300×200.

Die Colli werden, wie eingangs erläutert, auf vier Zuführbahnen 4a, 4b, 4c, 4d bereitgestellt, vom Greiferkopf 16, 18 gegriffen und auf der Beladeplatte 12 über der ZielPalette 2 in Form von vier Türmen abgestellt und aufgebaut. Die Beladeplatte 12 ist größer als die Euro-Stellfläche. Die Greifer benötigen Zwischenräume zum Greifen und Loslassen und können ca. 50 cm tief zwischen den entstehenden Collitürmen eintauchen.

Nachdem der Inhalt der Kommissionier-Palette aufgebaut ist, werden die entstandenen 4 Türme auf das Euro-Maß zusammengeschoben und das Blech herausgezogen, sodass die Waren auf die Palette abgesetzt werden.

Die kleineren Colli-Maße (1/8 u. 1/16) erfordern einen Zwischen-Schritt, bei dem die Collis auf ein extra Blech (Pufferpaltz) mit weiteren Zwischen-Räumen abgestellt werden und anschließend durch den Greifer selbst auf das ¼-Maß zusammengeschoben werden. Das entstehende Konstrukt passt wieder in die ¼-Türme-Struktur und wird auf schon bestehende Türme abgesetzt.

Der Roboter selbst bzw. seine SPS-Steuerung hat keine übergeordnete Intelligenz. Das heißt, er bekommt einfache Transport-Aufträge "nehme einen ColliStapel der Größe LxBxH von Bahn B und stelle ihn ab an Position xyz". Anschließend wird der Vollzug rückgemeldet oder eine Fehler-Situation. Weitere Aufträge sind das Verwenden eines Zwischen-Bleches und das Zusammenschieben kleinerer Collis darauf, bzw. das Zusammenschieben der endgültigen Palette.

Zentrale Funktion ist der Planungsalgorithmus zur Erzeugung der Kommissionier-aufträge. Wesentliche Schritte dieses Planungsalgorithmus sind im Ablaufdiagramm gemäß Figur 2 dargestellt.

Grundlage für die Berechnung des Packmusters ist eine Reihe von Anforderungen, die mehr oder weniger vorrangig zu erfüllen sind. Die Anforderungen sind mit einer Bewertung versehen, sodass das Planungsergebnis über alle Anforderungen hinweg eine Gesamt-Bewertung ergibt, die für jede Palette aber auch im Durchschnitt über mehrere Paletten zu maximieren ist. Diese Bewertung ist auch Grundlage für eine Beurteilung des Systems.

Die Einteilung in harte und weiche Anforderungen gelingt über die Vergabe von Prioritäten, wobei eine höchste Priorität für eine zwingend zu erfüllende Anforderung steht (hart).

Es sind folgende Anforderungen bekannt:
- Paletten-Höhe von 2 m, die einerseits nicht überschritten werden darf, andererseits möglichst erreicht werden soll (hohe Volumen-Ausnutzung)
- Maximales Paletten-Gewicht von 1200 kg (Euro-Palette; 600 kg bei Halb-Paletten)
- maximale Stabilität der Kommissionier-Paletten (möglichst "ebener" oberer Abschluss der Palette, keine Hohlräume etc., Rastfähigkeit der Colli berücksichtigen)
- Schwere, großformatige Artikel unten in der Palette, leichte, kleine oben
- Das Gewicht der gesamten Palette darf aus Gründen der Transportsicherheit nicht asymmetrisch in der Palette verteilt sein
- Artikel nach Möglichkeit nicht auf mehrere Paletten verteilen (Ausnahmen bei Beeinträchtigung der Stabilität oder Überschreitung des max. Gewichts)
- Artikel-Gruppen nach Möglichkeit nicht zu stark trennen wegen der AbpackReihenfolge in den Filialen, für das O&G-Sortiment zunächst weniger wichtig
- Artikel werden möglichst kompakt und geschlossen innerhalb der Palette positioniert, die Stabilität der Palette soll beim Abpacken möglichst lange erhalten bleiben. Nach Möglichkeit sollen keine zu hohen Türme eines Artikels geplant werden.
- Wenn ein Artikel eine gesamte Euro-Lage in der Palette belegt, entsteht erhöhter Aufstapel-Aufwand durch den Roboter (besser: ½ Euro-Lage doppelt hoch oder auch ¼ Euro 4-fache Höhe)
- Die Belastungs-Fähigkeit der Artikel durch daraufgepackte Collis muss berücksichtigt sein (Bestapelungs-Fähigkeit)
- Beachtung der Auflagepunkte. Die Grundfläche eines Colli wird geometrisch in 4, 9 oder 16 rechteckigen Teilbereichen betrachtet. Dabei wird bewertet, wie viele der Teilbereiche fest auf einem darunter gepackten Colli aufliegen.

Diese Anforderungen werden entsprechend priorisiert und entsprechend in einem neuen Planungsfall angewendet.

Jeder erzeugte Kommissionierauftrag bekommt eine eindeutig fortlaufende Nummer und die Zuordnung zur Lieferung. Mit dieser Nummer gelingt die Kommunikation zum WMS.

Die entstehenden Kommissionieraufträge sollen die einzelnen durch den Greiferkopf aufzustapelnden Artikelmengen (ein Artikel ggf. in zwei oder mehrere Greifvorgänge aufgeteilt) in Reihenfolge des Stapelns beinhalten.

Zu jeder Pack-Position gehören räumliche Koordinaten:
- wo liegt die Position innerhalb der Palette
- wo muss die Position zum Zeitpunkt des Packens abgestellt werden

Durch diesen Vorgang entsteht eine so genannte Aufbauvariante, welche mittels einer geeigneten räumlichen graphischen Darstellung beurteilt werden kann. Eine solche Aufbauvariante wird in der Regel, wie im Ablaufdiagramm gemäß Figur 3 dargestellt, automatisch bewertet, beispielsweise durch einen erfolgreichen Packablauf ohne Störungen. Eine weitere Möglichkeit besteht in der Bewertung durch einen Bediener an einem Display.

Eine Aufbauvariante kann vor dem eigentlichen Packvorgang natürlich manuell nachbearbeitet werden (siehe Figur 3), beispielsweise durch Ziehen der farblich dargestellten Colli auf dem Display. Beim Positionieren des Mauszeigers werden dabei jeweils die Artikelinformationen angezeigt. Nach jedem manuellen Umpositioniervorgang wird der jeweilige Colli durch das System eingerastet (Gridfunktion) und die Stabilitätskriterien geprüft und angewendet. Diese Automatik kann vom Bediener natürlich auch deaktiviert werden, so dass eine manuelle Vordefinition einer Aufbauvariante ebenso möglich ist.

Ziel dieses Systems ist es, berechnete und als stabil bewertete Aufbauvarianten immer wieder anzuwenden bei Erkennen der Möglichkeit in der durch das WMS vorgegebenen Artikelstruktur. Diese Artikelstruktur wird im Falle des O&G Sortiments als sich stark wiederholend eingestuft und somit wird die Wiederverwendbarkeit einer stabilen Aufbauvariante als relativ hoch eingestuft. Dabei können auch stabile Teilbereiche einer Aufbauvariante benutzt werden.

Eine Neuberechnung erfolgt nur, wenn keine verfügbare Aufbauvariante bzw. Teile einer solchen erkannt und benutzt werden können. Dadurch erzielt man schrittweise immer höhere Ladungsstabilität.

Während des Packvorgangs wird der jeweils aktuelle Zustand der Palette ebenfalls grafisch dargestellt. Sollte der Packvorgang abgebrochen werden müssen, so kann sich der Bediener die weiteren Schritte einzeln anzeigen lassen oder auch direkt die fertige Zielpalette ansehen, damit der Vorgang ggf. manuell komplettiert werden kann.

Weitere Elemente der Benutzeroberfläche bieten Einsicht in folgende Daten:
- Übermittelte Lieferungen (Beobachtung des Bearbeitungsstatus)
- Erzeugte Kommissionier-Aufträge (Bearbeitungsstatus, grafische Darstellung)
- Stammdaten (Artikel, Pack-Anforderungen)
- Protokollierung
- Statistik (Beurteilung der Planungs-Ergebnisse, Laufzeiten der Packvorgänge)

Mit einem Funktionsrechner wird die interne Schnittstelle zur SPS des Roboters abgewickelt.

Mit Anmeldung der Bereitstellung einer Packposition seitens des WMS wird der Roboter dann mit dem Packvorgang beauftragt (siehe Figur 2) (bei erster Position Bereitstellung einer Palette, Grundeinrichtung der Anlage). Bei Abnahmemeldung von der Bahn durch den Roboter wird dies an das WMS bzw. den MFC gemeldet, damit die Bahn für die nächste Bereitstellung verfügbar wird.

Bei Vollzugsmeldung des Roboters wird der Status der Packposition weitergesetzt und die nächste zu bearbeitende Position gesucht und an den Roboter übergeben. Nach der letzten Pack-Position wird dem Roboter der Auftrag "Zusammenschieben und Ausschleusen" gegeben.

Der Ablauf (siehe Figuren 2 und 3) im Gesamtsystem ist demnach wie folgt:
1. Das WMS schickt eine oder mehrere Lieferungen an das Komm-System.
2. Das Komm-System berechnet die benötigten Stellplätze zu den Lieferungs-positionen mit allen zu kommissionierenden Positionen (samt Geometriedaten zum "Packort") und meldet die benötigten Artikel und Mengen mit Angabe der Reihenfolge an das WMS
3. Zu beliebig späterem Zeitpunkt beginnt das WMS mit der Bereitstellung der Packpositionen zu einem Stellplatz auf Bereitstell-Bahnen (Andienen der benötigten Teil-Mengen). Mit jeder bereitgestellten Teilmenge erfolgt die Meldung an das Komm-System. Die Reihenfolge der Bereitstellung muss der Reihenfolge im Komm-Auftrag entsprechen (welche Bahn jeweils verwendet wird ist frei). Immer wenigstens die nächste nötige Komm-Position muss erreichbar sein. Wenn mit einem neuen Komm-Auftrag begonnen wird, dürfen nur Positionen dieses Auftrages folgen, bis er fertiggestellt ist.
4. Der Roboter bekommt Aufträge zur Aufnahme der Positionen (Bereitstellbahn, Colli-Größe, Zielkoordinaten) und setzt sie an der entsprechenden Stelle im Kommissionier-Feld ab. (Ggf. mit Zwischenschritt "kleine Collis auf extra-Blech".)
5. Nach Absetzen der letzten Komm-Position erfolgt eine Abschlussmeldung an den Roboter zum Zusammenschieben und Ausschleusen. Außerdem erfolgt die Abschlussmeldung an das WMS, dass die Palette in die Lagerhaltung übernommen werden kann.

Erfindungsgemäß werden Fehlersituationen wie folgt bearbeitet:
Wichtigster bekannter Fehler wäre die falsche Bereitstellung einer Komm-Position durch das WMS (zu kleiner / zu großer Colli, falsche Höhe). In diesem Fall wird der Komm-Vorgang abgebrochen, die begonnene Palette mit den bereits aufgebauten Positionen zusammengeschoben und ausgeschleust. Die restlichen Komm.-Positionen werden manuell aufgeräumt bzw. an einen Hand-Packplatz umgeleitet. Der Komm-Auftrag muss dort manuell fertig gestellt werden.

Eine weitere Fehlersituation könnte entstehen, wenn das WMS eine Position bereitstellt, die nicht zu dem aktuellen Komm-Auftrag gehört. Hier könnte die Bahn durch den Roboter auf einen manuellen NIO-Platz geräumt werden und die Bereitstellung wird negativ quittiert. Ein Abbrechen des aktuellen Auftrages ist hierdurch nicht nötig.

All die vorbeschriebenen Parameter, Bedingungen, Daten, Randbedingungen, etc., die bei der Abarbeitung des Kommisionierauftrags berücksichtigt werden und auch die Berechnung/Erstellung von Aufbauvarianten, können jeweils unabhängig voneinander zum Gegenstand eines Patentanspruchs gemacht werden.

Offenbart ist ein Verfahren zum Steuern einer Kommissionierung von gemischten Produkten auf einer Zielpalette, wobei die Produkte/Collis auf einer Beladeplatte oder dergleichen positioniert und dann an die Zielpalette übergeben werden.

### Beschreibung der Figur 2 (Ablaufplan Packmuster-Generator)

| | | |
|---|---|---|
| S1 | Start | |
| S2 | Übertragung des Auftrags Anteil zu kommissionierende Paletten | |
| | | |
| S3 | Prüfen der harten und weichen Anforderungen gegen die vorgeschlagenen Paletten, ggf. Neueinteilung der Zielpaletten: | |
| | | |
| | | - max. Palettenhöhe, max. Palettengewicht; |
| | | - Abpackreihenfolge in den Märkten |
| S4 | Planen einer Zielpalette | |
| S5 | Suche einer stabilen Aufbau(teil-)variante | |
| S6 | Abarbeitung der Kommissionierpositionen im Zusammenspiel mit dem Roboter | |
| | | |
| S7 | Auftrag komplett? | |
| S8 | Ende | |

### Beschreibung der Figur 3 (Suche einer stabilen Aufbau (teil-) variante)

| | | |
|---|---|---|
| S1 | Start | |
| S2 | Übernehmen zu kommissionierender Positionen als Teilauftrag | |
| | | |
| S3 | Ermitteln einer passenden stabilen Aufbauvariante bzw. eines passsenden Teiles einer stabilen Aufbauvariante anhand der Artikelstruktur | |
| | | |
| S4 | Passende (Teil-)Variante gefunden? | |
| S5 | Berechnen einer neuen (Teil-)Variante | |
| S6 | Berechnen einer neuen Aufbauvariante für den zu berechnenden Teil der Palette anhand der Kriterien: | |
| | | |
| | | - maximale Stabilität, möglichst ebener oberer Anschluss der Palette, keine Hohlräume; |
| | | - Rastfähigkeit der Colli; |
| | | - schwere, großformatige Artikel unten in der Palette, leichte, kleine oben; |
| | | - Gewichtsverteilung möglichst symmetrisch; |
| | | - Beachtung der Auflagepunkte jedes Colli |
| S7 | Grafische Darstellung der kompletten Zielpalette mit Hervorhebung und Bearbeitungsmöglichkeit der neuen (Teil-)Variante | |
| | | |
| S8 | Wenn gewünscht, manuelle Nachbearbeitung der neuen (Teil-)Variante inkl. Prüfen aller zugrunde liegenden Bedingungen | |
| | | |
| S9 | Berechnung ok? | |
| S10 | Benutzen der gefundenen stabilen bzw. neu berechneten (Teil-) Variante | |
| | | |
| S11 | Ende | |

### Bezugszeichenliste:

- 1: Beladesystem
- 2: Produkt
- 4: Zuführbahn
- 6: Palettentransportband
- 8: Zielpalette/Kommissionierpalette
- 10: Palettenmagazin
- 12: Beladeplatte
- 14: Kommissioniereinheit
- 15: Portal
- 16: Greiferkopf
- 18: Greiferkopf
- 20: Greiferplatte
- 22: Steuereinheit
- 24: Turm
- 26: Stützarm
- 28: Zentriereinrichtung
- 30: Schiebewand
- 32: Packmustergenerator
- 34: Ausschleusebahn

## Patentansprüche

1. Verfahren zum Steuern einer Kommissionierung von gemischten Produkten (2) / Collis auf einer Zielpalette (8), mit den Schritten:
- Erzeugen eines Packmusters mittels eines Packmustergenerators (32) in Abhängigkeit vom Kommissionierauftrag,
- Bereitstellen der Produkte (2) auf Zuführbahnen (4),
- Entnahme der Produkte (2) von den Zuführbahnen (4) mittels eines Greiferkopfes (16, 18) oder dergleichen, in einer vorbestimmten Sequenz nach dem Packmuster,
- Abstellen der jeweiligen Produkte (2) in mehreren Produkt-Türmen (24) auf einer Beladeplatte (12) mittels des Greiferkopfes (16, 18) oder dergleichen, wobei die Türme (24) etwa parallel aufgebaut werden und im Abstand zu einander stehen, wobei die von den Türmen (24) belegte Fläche auf der Beladeplatte (12) größer ist als die Beladefläche einer Zielpalette (8),
- Zusammenschieben der Türme (24) auf das Maß der Zielpalette (8) mittels einer Zentriereinrichtung (28),
- Verfahren oder Auseinanderfahren der Beladeplatte (12) entlang einer Führung in Horizontalrichtung zum Übergeben der zusammengeschobenen Produkt-Türme (24) an die Zielpalette (8)
und
- Ausschleusen der so erstellten Kommissionierpalette über eine Ausschleusebahn (34).

2. Verfahren nach Patentanspruch 1, wobei beim Erzeugen eines Packmusters die Kommissionierpalette auf einem Display visualisiert ist und/oder der aktuelle Aufbau der Kommissionierpalette am Display während des Kommissioniervorganges visualisiert ist.

3. Verfahren nach Patentanspruch 1, wobei ein Kommissionierer den Aufbau der Kommissionierpaletten manuell ändern kann und die manuelle Eingabe gespeichert und bei ähnlichen Kommissionieraufträgen in die Berechnung des Packmusters eingeht.

4. Verfahren nach einem der vorhergehenden Patentansprüche, wobei kleinere Collis auf einem Pufferplatz abgestellt und auf ein Maß zusammengeschoben werden, das dem Maß der Produkte (2) entspricht und Absetzen der zusammengeschobenen Collis auf dem vorgesehen Produkt-Turm (24).

5. Verfahren nach Patentanspruch 4, wobei vier Produkt-Türme (24) auf der Beladeplatte (12) aufgebaut werden und jedes Colli etwa die Hälfte oder ein Viertel der Fläche der Produkte (2) aufweist, so dass entsprechend auf dem Pufferplatz zwei oder vier Collis pro Lage abgesetzt werden.

6. Verfahren nach einem der vorhergehenden Patentansprüche, wobei beim Turmaufbau schwere Produkte (2) unten liegend angeordnet sind.

7. Verfahren nach einem der vorhergehenden Patentansprüche, wobei bei der Berechnung des Packmusters die Auflagebereiche der Produkte (2) im jeweiligen Produkt-Turm (24) und eventuell vorhandene Stapelnasen/Stapelausnehmungen oder sonstige Boden-/Kantenstrukturen berücksichtigt werden.

8. Verfahren nach einem der vorhergehenden Patentansprüche, wobei die Kommissionierpalette mit einer Transportsicherung versehen wird.

9. Verfahren nach einem der vorhergehenden Patentansprüche, wobei zum Aufbau der Produkt-Türme (24) zumindest zwei Greiferköpfe (16, 18) angesteuert werden.

10. Verfahren nach einem der vorhergehenden Patentansprüche, wobei in das Packmuster zumindest eine der folgenden Anforderungen eingeht:
- maximale Palettenhöhe, beispielsweise 2 m,
- maximales Palettengewicht, beispielsweise 1 200 kg,
- maximale Stabilität des Turmaufbau, beispielsweise ebener oberer Abschluss der Kommissionierpalette, keine Hohlräume, Rastfähigkeit der Collis, symmetrische Gewichtsverteilung, etc.,
- Artikel nicht auf mehrere Kommissionierpaletten verteilen,
- Artikelgruppen möglichst auf einer Kommissionierpalette oder in einem Produkt-Stapel zusammenfassen,
- gleiche Artikel möglichst in einem Turm (24) zusammenfassen.

11. Verfahren nach einem der vorhergehenden Patentansprüche, mit dem Schritt:
Berechnung einer alternativen Aufbauvariante und bei Bedarf automatisches oder manuelles Auswählen der alternativen Aufbauvariante.

12. Verfahren nach Patentanspruch 11, mit einer Priorisierung der Aufbauvarianten.

13. Verfahren nach einem der vorhergehenden Patentansprüche, wobei beim Aufbau der Produkt-Türme (24) der jeweilige Produkt-Turm (24) mit Bezug zu einem darauf abzulegendem Produkt (2)/Colli zentriert wird.

## Claims

1. Method for controlling picking of mixed products (2)/packages on a target pallet (8) comprising the steps:
- generating a packing pattern by means of a packing pattern generator (32) in dependence on the picking commission,
- providing the products (2) on infeed conveyors (4),
- taking the products (2) from the infeed conveyors (4) by means of a grab head (16, 18) or the like in a predetermined sequence according to the packing pattern,
- placing the respective products (2) in several product towers (24) on a loading plate (12) by means of the grab head (16, 18) or the like, wherein the towers (24) are built approximately parallel to each other and are spaced from each other, wherein the area occupied by the towers (24) on the loading plate (12) is larger than the loading surface of a target pallet (8),
- pushing the towers (24) together to the dimensions of the target pallet (8) by means of a centering device (28),
- sliding or moving the loading plate (12) apart in the horizontal direction along a guide for transferring the pushed together product towers (24) to the target pallet (8)
and
- discharging the picking pallet thus created via a discharge belt (34).

2. Method according to patent claim 1, wherein, when a packing pattern is generated, the picking pallet is visualized on a display and/or the current structure of the picking pallet is visualized on the display during the picking process.

3. Method according to patent claim 1, wherein a picker can manually change the structure of the picking pallets and the manual input is stored and is included in the calculation of the packing pattern for similar picking commissions.

4. Method according to one of the preceding patent claims, wherein smaller packages are placed on a buffer space and pushed together to dimensions corresponding to the dimensions of the products (2) and the pushed together packages are placed on the designated product tower (24).

5. Method according to claim 4, wherein four product towers (24) are built on the loading plate (12) and each package has about half or a quarter of the area of the products (2) so that respectively two or four packages per layer are placed on the buffer space.

6. Method according to one of the preceding patent claims, wherein heavy products (2) are arranged lying at the bottom during tower construction.

7. Method according to one of the preceding patent claims, wherein, when calculating the packing pattern, the support areas of the products (2) in the respective product tower (24) and any present stacking lugs/stacking recesses or other bottom/edge structures are taken into account.

8. Method according to one of the preceding patent claims, wherein the picking pallet is provided with a transport safety device.

9. Method according to one of the preceding patent claims, wherein at least two grab heads (16, 18) are driven for the construction of the product towers (24).

10. Method according to one of the preceding patent claims, wherein at least one of the following requirements is included in the packing pattern:
- maximum pallet height, for example 2 m,
- maximum pallet weight, for example 1200 kg,
- maximum stability of the tower structure, for example flat upper end of the picking pallet, no hollow spaces, engageability of the packages, symmetrical weight distribution, etc.,
- articles are not distributed over several picking pallets,
- article groups preferably combined on one picking pallet or in one product stack,
- if possible, the same articles are combined in one tower (24).

11. Method according to one of the preceding patent claims, comprising the step:
calculating an alternative structure variation and automatically or manually selecting the alternative structure variation if required.

12. Method according to patent claim 11, with a prioritization of the structure variations.

13. Method according to one of the preceding patent claims, wherein during the assembly of the product towers (24), the respective product tower (24) is centered with regard to a product (2)/package to be placed thereon.

## Revendications

1. Procédé de commande d'une préparation de commande de produits mixtes (2)/colis sur une palette cible (8), avec les étapes :
- la génération d'un motif de conditionnement au moyen d'un générateur de motif de conditionnement (32) en fonction de l'ordre de préparation des commandes,
- la fourniture des produits (2) sur des voies d'acheminement (4),
- le retrait des produits (2) des voies d'acheminement (4) au moyen d'une tête de préhension (16, 18) ou similaires, dans une séquence prédéterminée selon le motif de conditionnement,
- le dépôt des produits (2) respectifs dans plusieurs tours de produit (24) sur une
plaque de chargement (12) au moyen de la tête de préhension (16, 18) ou similaires, dans lequel les tours (24) sont constituées à peu près parallèlement et sont à distance les unes des autres, dans lequel la surface occupée par les tours (24) sur la plaque de chargement (12) est supérieure à la surface de chargement d'une palette cible (8),
- le resserrement des tours (24) à la dimension de la palette cible (8) au moyen d'un dispositif de centrage (28),
- le déplacement ou l'écartement de la plaque de chargement (12) le long d'un guidage dans le sens horizontal pour la remise des tours de produit (24) resserrées à la palette cible (8)
et
- l'extraction de la palette de préparation de commande ainsi établie par le biais d'une voie d'extraction (34).

2. Procédé selon la revendication 1, dans lequel lors de la génération d'un motif de conditionnement la palette de préparation de commande est visualisée sur un écran et/ou la structure actuelle de la palette de préparation de commande est visualisée sur l'écran pendant le processus de préparation de commande.

3. Procédé selon la revendication 1, dans lequel un préparateur de commandes peut modifier manuellement la structure des palettes de préparation de commande et la saisie manuelle est enregistrée et lors d'ordres de préparation de commande similaires intervient dans le calcul du motif de conditionnement.

4. Procédé selon l'une quelconque des revendications précédentes, dans lequel de plus petits colis sont déposés sur un emplacement tampon et sont resserrés à une dimension qui correspond à la dimension des produits (2) et abaisser des colis resserrés sur la tour de produit prévue (24).

5. Procédé selon la revendication 4, dans lequel quatre tours de produit (24) sont constituées sur la plaque de chargement (12) et chaque colis présente à peu près la moitié ou un quart de la surface des produits (2) de sorte que deux ou quatre colis par couche soient déposés en conséquence sur l'emplacement tampon.

6. Procédé selon l'une quelconque des revendications précédentes, dans lequel pour la structure de tour, des produits lourds (2) sont agencés en bas.

7. Procédé selon l'une quelconque des revendications précédentes, dans lequel lors du calcul du motif de conditionnement les zones d'appui des produits (2) dans la tour de produit (24) respective et des nez/évidements de pile éventuellement présents ou autres structures de fond/d'arête sont pris en compte.

8. Procédé selon l'une quelconque des revendications précédentes, dans lequel la palette de préparation de commande est pourvue d'une sécurité de transport.

9. Procédé selon l'une quelconque des revendications précédentes, dans lequel pour la structure des tours de produit (24), au moins deux têtes de préhension (16, 18) sont commandées.

10. Procédé selon l'une quelconque des revendications précédentes, dans lequel au moins une des exigences suivantes intervient dans le motif de conditionnement :
- hauteur de palette maximale, par exemple 2 m,
- poids de palette maximal, par exemple 1 200 kg,
- stabilité maximale de la structure de tour, par exemple fermeture supérieure plane de la palette de préparation de commande, aucun espace creux, capacité d'encliquetage des colis, répartition de poids symétrique, etc.,
- ne pas répartir des articles sur plusieurs palettes de préparation de commande,
- regrouper des groupes d'articles si possible sur une palette de préparation de commande ou dans une pile de produits,
- regrouper des articles identiques si possible dans une tour (24).

11. Procédé selon l'une quelconque des revendications précédentes, avec l'étape : le calcul d'une variante de structure alternative et si besoin la sélection automatique ou manuelle de la variante de structure alternative.

12. Procédé selon la revendication 11, avec une priorisation des variantes de structure.

13. Procédé selon l'une quelconque des revendications précédentes, dans lequel pour la structure des tours de produit (24), la tour de produit respective (24) est centrée en référence à un produit (2)/colis à déposer dessus.
